# EUROPÄISCHE PATENTSCHRIFT

(11) **EP 1 868 869 B1**
(45) Veröffentlichungstag und Bekanntmachung des Hinweises auf die Patenterteilung: **05.08.2009**
(21) Anmeldenummer: 06753383.6
(22) Anmeldetag: 12.04.2006
(51) Int. Cl.: B62D 1/19

(54) **ANORDNUNG EINER LENKSÄULE**
ARRANGEMENT OF A STEERING COLUMN
DISPOSITION D'UNE COLONNE DE DIRECTION

(30) Priorität: 12.04.2005 DE 102005016789
(43) Veröffentlichungstag der Anmeldung: 26.12.2007
(73) Patentinhaber: ZF-Lenksysteme GmbH, 73527 Schwäbisch Gmünd (DE)
(72) Erfinder: HEINTSCHEL, Manfred, 73525 Schwäbisch Gmünd (DE); BLASER, Hermann, 89520 Heidenheim (DE)
(86) Internationale Anmeldenummer: PCT/EP2006/003366
(87) Internationale Veröffentlichungsnummer: WO 2006/108631

(56) Entgegenhaltungen:
- WO-A-20/05030558
- FR-A- 2 450 733
- US-A- 4 046 024
- US-A- 4 365 825
- US-A- 5 507 521

## Beschreibung

Die Erfindung betrifft eine Anordnung einer Lenksäule.

Eine solche Anordnung ist beschrieben in den Patentschriften US 4,365,825 und DE 2809664. Dabei ist eine Lenkspindel in der Koppel eines Lenkergetriebes gelagert (das in anderer Literatur auch als Getriebekette, insbesondere Vierdrehgelenkkette bezeichnet wird, siehe "Feinmechanische Bauelemente" von Prof. Siegfried Hildebrand, Carl Hanser Verlag, München, Abschnitt 3.4.5.1). Der Sinn dieser bekannten Konstruktion besteht darin, eine Anordnung einer Lenksäule mit Lenkrad anzugeben, bei der im Falle einer Fahrzeugverzögerung bei einem frontseitigen Kollisionsfall das Lenkrad ohne aktives Zutun durch den Körper des Fahrers zwangsweise so verlagert wird, dass es selbst in wirksamer Weise eine Schutzfunktion erfüllen kann. Dabei führt das Lenkrad im Falle eines Frontalaufpralles augenblicklich zwei einander überlagerte Bewegungen gleichzeitig selbsttätig aus, wobei es sowohl in Richtung Armaturenbrett, also vom Fahrer weg verlagert wird als auch aus der nahezu horizontalen Gebrauchsstellung in eine vertikale Schutzstellung überführt wird.

Außerdem ist es bekannt (DE 2908906), ein Lenkrad mit Hilfe eines Lenkergetriebes in verschiedenen Neigungsstellungen einzustellen. Dabei sind zwei Lenker, die durch eine Koppel gelenkig miteinander verbunden sind, an der Stirnwand einer Fahrerkabine angelenkt. In der Koppel ist eine teleskopartig ausgebildete Lenkspindel drehbar gelagert. Die Neigung eines von zwei Lenkern ist in Stufen einstellbar. Die steilste der Lenkradstellungen (das entspricht der flachsten Lenkspindelneigung) ist bei dieser Konstruktion als bequeme Aussteigestellung vorgesehen. Durch die teleskopartig ausgebildete Lenkspindel ist das Lenkrad längs seiner Lenksäulenachse gegenüber der Koppel verschiebbar.

In der WO2005/030558 A1 wird eine Anordnung einer Lenksäule offenbart, die im Falle eines Frontalaufpralls eine andere Lage einnehmen kann als im ungestörten Fahrbetrieb. Die Lenksäule weist in einem oberen Gehäuse eine Lenkspindel auf, die zum Tragen eines Lenkrades vorgesehen ist. Die Lenkspindel ist drehbar in dem oberen Gehäuse gelagert, welches in einer Getriebekette die Koppel bildet, die über zwei Koppelgelenke jeweils mit den oberen Bereichen eines vorderen bzw. eines hinteren Lenkers verbunden ist. Die Lenkspindel ist mit einer Lenkwelle über ein Gelenk verbunden, das unweit der Koppel vorgesehen ist. Die beiden Lenker sind in ihren unteren Bereichen über Lenkergelenke an Fahrzeugteile angelenkt, die im ungestörten Fahrbetrieb fest mit der Fahrerkabine verbunden sind. Die Geometrie der Getriebekette ist derart gestaltet, dass bei Vorwärtsfahrt im Falle eines Frontalaufpralles die Lenkspindel eine Schutzstellung mit verstärkt der Horizontalen angenäherter Neigung einnehmen kann. Im ungestörten Fahrbetrieb ist die Lenkspindel mittels Einstellmitteln in der Höhe und Neigung dadurch einstellbar, dass das obere Gehäuse, durch Einstellen der Länge von einem der Lenker, entsprechend einstellbar ist. Für die Einstellung der Lenkspindel in der Höhe ist eine Führungsbahn vorgesehen und zwar zur mittelbaren Führung eines Lenkergelenks eines Lenkers. Um im Falle eines Frontalaufpralls ein Verschwenken der Lenkspindel in die gewünschte Position zu ermöglichen, ist die Führung des Lenkers in der Führungsbahn durch eine pyrotechnische Vorrichtung aufhebbar.

Die WO2005/030558 A1 offenbart damit eine Anordnung einer Lenksäule, die in einer Fahrerkabine eines Kraftfahrzeuges angeordnet ist, das einen Fahrersitz aufweist, und die im Falle eines Frontalaufpralles der Fahrerkabine eine andere Lage einnehmen kann als im ungestörten Fahrbetrieb, mit folgenden weiteren Merkmalen: a) die Lenksäule weist in einem oberen Gehäuse eine Lenkspindel auf, die zum Tragen eines Lenkrads vorgesehen ist, b) die Lenkspindel ist drehbar in dem oberen Gehäuse gelagert, das in einer Getriebekette die Koppel bildet, die über zwei Koppelgelenke jeweils mit den oberen Bereichen eines vorderen bzw. eines hinteren Lenkers verbunden ist, c) die Lenkspindel ist mit einer Lenkwelle über ein Gelenk verbunden, das unweit der Koppel vorgesehen ist, d) beide Lenker sind außerdem in ihren unteren Bereichen über Lenkergelenke an Fahrzeugteile angelenkt, die im ungestörten Fahrbetrieb fest mit der Fahrerkabine verbunden sind, e) die Geometrie der Getriebekette ist derart gestaltet, dass bei Vorwärtsfahrt im Falle eines Frontalaufpralles die Lenkspindel eine Schutzstellung mit verstärkt der Horizontalen angenäherter Neigung einnehmen kann, wobei die Lenkspindel für den ungestörten Fahrbetrieb mittels Einstellmitteln in der Höhe und Neigung dadurch einstellbar ist, dass das obere Gehäuse entsprechend einstellbar ist, und zwar durch Einstellen der Länge von wenigstens einem der Lenker, sowie f) für die Einstellung der Lenkspindel in der Höhe ist eine erste Führungsbahn vorgesehen zur mittelbaren Führung eines Lenkergelenks eines Lenkers.

Es ist Aufgabe der Erfindung, eine Anordnung einer Lenksäule zu schaffen, die im Falle eines Frontalaufpralles in wirksamer Weise eine Schutzfunktion für den Fahrer erfüllt, und die es zugleich ermöglicht, die Höhe und Neigung des Lenkrades individuell einzustellen.

Diese Aufgabe wird gelöst durch eine Anordnung mit den Merkmalen des Patentanspruchs 1. Kurz gefasst handelt es sich dabei um eine Anordnung einer Lenksäule eines Kraftfahrzeuges, die im Falle eines Frontalaufpralles der Fahrerkabine eine andere Lage einnehmen kann als im Gebrauchzustand. Dabei ist eine Lenkspindel drehbar in der Koppel einer Getriebekette gelagert, deren beide Lenker in ihren unteren Bereichen über Lenkergelenke an fest stehende Fahrzeugteile angelenkt sind. Die Geometrie der Getriebekette ist derart gestaltet, dass bei Vorwärtsfahrt im Falle eines Frontalaufpralles die Lenkradebene ihre Neigung verstärkt der Vertikalen annähert. Um nun eine Anordnung zu schaffen, die bei Frontalaufprall wirksam eine Schutzfunktion für den Fahrer erfüllt und es zugleich ermöglicht, Höhe und Neigung des Lenkrades individuell einzustellen, ist das Lenkrad für den Gebrauchszustand mittels Einstellmitteln in Höhe und Neigung dadurch einstellbar, dass die Koppel entsprechend einstellbar ist, und zwar durch Einstellen der Länge von wenigstens einem der Lenker und/oder durch Verlagerung von wenigstens einem Lenkergelenk.

Dabei ist von der Überlegung ausgegangen worden, dass auch bei einer Lenksäule, die im Falle eines Frontalaufpralles eine Schutzfunktion erfüllt, Möglichkeiten für eine individuelle Einstellung der Höhe und Neigung des Lenkrads für den ungestörten Fahrbetrieb gegeben sein sollten, wobei die Koppelgelenke einer Getriebekette möglichst dicht am Lenkrad liegen sollten, damit das Lenkrad im Falle eines Frontalaufpralles nicht zu tief in Richtung auf den Fahrersitz geschwenkt wird; denn dort könnte es zu Beinverletzungen kommen. Deshalb sollte keine teleskopische Höhenverstellung des Lenkrads vorgesehen sein, wenn das Teleskop im Bereich zwischen den Koppelgelenken und dem Lenkrad angeordnet ist, da dies zu einem variablen und damit unter Umständen zu großen Abstand zwischen den Koppelgelenken und dem Lenkrad führen würde. Es erschien daher angebrachter, die Höhenverstellbarkeit dadurch zu erreichen, dass Einstellmittel vorgesehen sind zur Höhen- und Neigungseinstellung der Koppel einer Getriebekette, wobei diese Einstellung durch Veränderung der Länge von wenigstens einem Lenker und/oder durch Verlagerung von wenigstens einem Lenkergelenk vorgenommen wird.

Vorteilhafte Ausführungsformen einer erfindungsgemäßen Anordnung sind in den Unteransprüchen angegeben.

Erfindungsgemäß ist es vorgesehen, daß die Einstellung der Höhe und Neigung der Lenkspindel durch Einstellen der Länge eines Lenkers und/oder durch Verlagerung wenigstens eines der Lenkergelenker erfolgt für die Einstellung der Lenkspindel in der Höhe wenigstens eine Führungsbahn vorgesehen ist zur mittelbaren oder unmittelbaren Führung eines Lenkergelenks eines Lenkers. Für die mittelbare oder unmittelbare Führung des Lenkers ist eine zweite Führungsbahn vorgesehen, die zur ersten Führungsbahn parallel verläuft. Im Falle eines Frontalaufpralles ist die Führung eines Lenkers, die durch eine der Führungsbahnen erfolgt, selbsttätig aufhebbar, und zwar durch dieselben Trägheitskräfte, die beim Frontalaufprall auftreten. Diese Führung kann aber zur Erleichterung des Ein- und Aussteigens des Fahrers auch mittels eines Bedienungselementes aufhebbar sein.

Eine Alternative oder Ergänzung besteht darin, dass ein Lenkergelenk mit einem dieses tragenden Zwischenteil verbunden ist, das zwecks Höheneinstellung auf einer Führungsbahn geführt ist, und dass zwecks Erleichterung des Ein- und Aussteigens des Fahrers das Zwischenteil mittels eines Bedienungsmittels derart bewegbar ist, dass sich das Lenkergelenk in eine höhere Position verlagert.

Unter Ausnutzung von Konstruktionen, wie sie zur Höheneinstellung von Lenksäulen insbesondere von Nutzkraftfahrzeugen üblich sind, kann bevorzugt ein Lagerbock vorgesehen sein, der mit der Fahrerkabine verbunden ist und der die Lenkergelenke mittelbar oder unmittelbar trägt und wenigstens eine Führungsbahn aufweist.
Anhand von Ausführungsbeispielen wird die Erfindung nun näher erläutert. Es zeigen schematisch:
Figur 1: eine erfindungsgemäße Anordnung in Gebrauchsposition,
Figur 2: dieselbe Anordnung im Falle eines Frontalaufpralles und als ein-und ausstiegsfreundliche Anordnung,,
Figur 3: ein Konstruktionsdetail,
Figur 4: eine Variante in Ein/Ausstiegsposition,
Figur 5: eine weitere Variante in Ein/Ausstiegsposition.

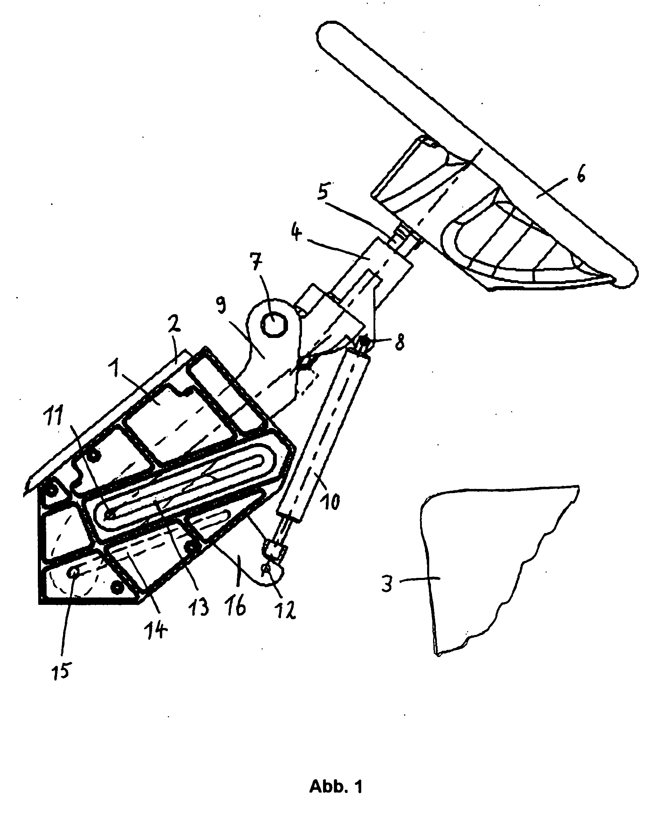

In Figur 1 ist eine erfindungsgemäße Anordnung einer Lenksäule dargestellt, die in einem Lagerbock 1 gehalten ist, der an einem Teil einer Fahrerkabine 2 eines Kraftfahrzeuges befestigt ist. Schräg unterhalb der Lenksäule befindet sich ein Fahrersitz 3. In einem oberen Gehäuse 4 ist eine Lenkspindel 5 drehbar gelagert, die ein Lenkrad 6 trägt.

Das obere Gehäuse 4 bildet die Koppel einer so genannten Getriebekette (auch Lenkergetriebe genannt) und weist ein vorderes und ein hinteres Koppelgelenk 7 bzw. 8 auf, die mit einem vorderen bzw. hinteren Lenker 9 bzw. 10 verbunden sind. Der vordere Lenker 9 ist durch eine von zwei Wangen eines unteren Gehäuses gebildet. Die zweite Wange muss man sich unterhalb der Zeichenebene und parallel zu dieser verlaufend vorstellen. Beide Wangen sind in geeigneter Weise miteinander gekoppelt, insbesondere verbunden, können also beispielsweise die Wangen eines U-Profils bilden.

Die Lenkspindel 5 ist mit einer nicht dargestellten und nach unten führenden Lenkwelle über ein Gelenk verbunden, das unweit der Koppel 4 vorgesehen ist,

Der vordere Lenker 9 ist als zweiarmiger Hebel gestaltet, dessen oberer Hebelarm vom vorderen Koppelgelenk 7 bis zu einem vorderen Lenkergelenk 11 reicht, das unterhalb des Lenkrades und vor diesem liegt und das auf einer ersten Führungsbahn 13 des Lagerbockes 1 geführt und dort bevorzugt stufenlos arretierbar ist. Der andere (untere) Hebelarm reicht vom vorderen Lenkergelenk 11 bis zu einem Führungselement 15, das verschiebbar auf einer zweiten Führungsbahn 14 des Lagerbockes angeordnet ist, die parallel zur ersten Führungsbahn verläuft.

Der hintere Lenker 10 zwischen dem hinteren Koppelgelenk 8 und einem hinteren Lenkergelenk 12 ist als längeneinstellbares Element, beispielsweise als blockierbare Gasdruckfeder ausgebildet. Wenn deren Länge für den ungestörten Fahrbetrieb individuell eingestellt wird, ergibt sich eine individuelle Gebrauchsstellung des Lenkrads 6 mit individueller Neigung von Lenkrad und Lenkspindel entsprechend den Bedürfnissen des jeweiligen Fahrers.

Alternativ oder zusätzlich kann durch Einstellen der Längsrichtung des Lenkers 9 die Lenkspindel 5 in an sich bekannter Weise in der Neigung einstellbar sein.

Das hintere Lenkergelenk 12 befindet sich zwischen dem hinteren Lenker 10 und einem Zwischenteil 16, das mit dem vorderen Lenker 9 gelenkig verbunden und ebenso wie dieser auf den Führungsbahnen 13 und 14 geführt wird, wenn die Lenksäule mit ihren Teilen 4 bis 12 und 15 zwecks Höhenverstellung nach oben geschoben und innerhalb des Einstellbereiches arretiert wird, welcher der Länge der Führungsbahnen entspricht. Die Führung des Zwischenteils 16 erfolgt in Figur 1 an denselben Stellen 11 und 15 wie die Führung des vorderen Lenkers 9, was aber nicht zwingend ist. Das Arretieren kann in bekannter Weise (siehe beispielsweise DE 195 45 438 oder DE 101 56 327) durch Festspannen des vorderen Lenkergelenkes 11 am Lagerbock 1 erfolgen. Durch die Arretierung sind beide Lenker 9,10 im ungestörten Fahrbetrieb in ihren unteren Bereichen über die Lenkergelenke 11, 12 an Fahrzeugteilen 1,16 gehalten, die fest mit der Fahrerkabine 2 verbunden sind. Die Lenkspindel 5 ist somit für den ungestörten Fahrbetrieb mittels nicht weiter dargestellter Arretierungsmittel in der Höhe einstellbar. In der in Figur 1 dargestellten Lage ist die Lenksäule auf ihre tiefst mögliche Position eingestellt, weil sich das vordere Lenkergelenk 11 und das Führungselement 15 jeweils am unteren Ende der zugehörigen Führungsbahn 13 bzw. 14 befinden.

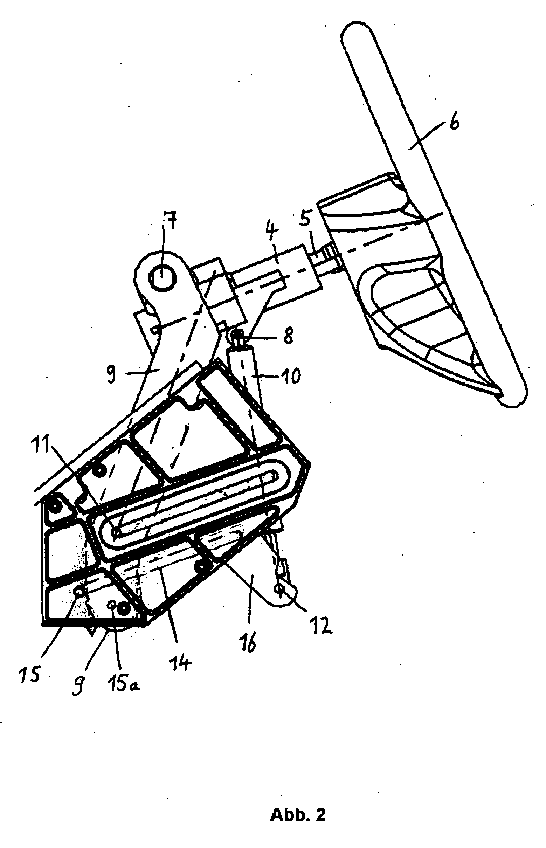

Figur 2 zeigt, wie die Lenksäule in Folge eines Frontalaufpralles der Fahrerkabine eine andere Lage eingenommen hat als im ungestörten Fahrbetrieb. Dazu ist die Geometrie der Gliederkette 4, 9, 10 derart gestaltet und die Massenverteilung in der Lenksäule derart gewählt, dass bei Vorwärtsfahrt im Falle eines Frontalaufpralles die Lenkspindel 5 ihre Neigung selbsttätig verstärkt der Horizontalen annähert, wie in Figur 2 gezeigt.

Um das erreichen zu können, ist im Falle eines Frontalaufpralles die Führung des Lenkers 9 durch die zweite Führungsbahn 14 selbsttätig aufhebbar, indem das Führungselement 15 infolge der Massenträgheit der Lenksäule aus seiner Normalstellung 15 ausrastet und mit samt dem freien Ende des Lenkers 9 die neue Stellung 15a einnimmt. Dadurch ist der als zweiarmiger Hebel ausgebildete Lenker 9 um das vordere Lenkergelenk 11 in die in Figur 2 dargestellte Lage geschwenkt, während das Zwischenteil 16 mit samt dem hinteren Lenkergelenk 12 seine Lage beibehält. Mit dem Schwenken des vorderen Lenkers 9 ist das vordere Koppelgelenk 7 nicht nur in Fahrtrichtung, sondern auch nach oben verlagert. Da der hintere Lenker 10 seine Länge beibehält, ist in Figur 2 im Vergleich zu Figur 1 das obere Gehäuse 4 (die Koppel) zugleich vom Fahrer weg gedrängt und die Lenkspindel mehr in Richtung zur Horizontalen geschwenkt, so dass das Lenkrad eine steilere Lage (Schutzstellung) einnimmt, die ungefähr parallel zur verletzungsgefährdeten Brust eines Fahrers verläuft.

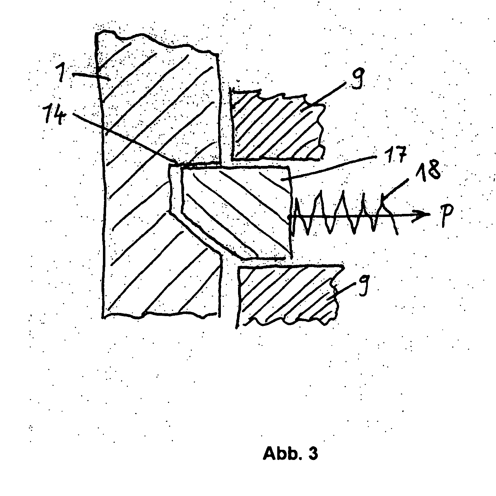

Damit im Falle eines Frontalaufpralles die Gebrauchsstellung selbsttätig verlassen und die Schutzstellung erreicht werden kann, muss dafür gesorgt sein, dass das Führungselement 15 dann, wenn eine bestimmte Führungskraft überschritten wird, die zweite Führungsbahn 14 verlassen kann. Dazu kann das Führungselement 15 entsprechend der vom Fahrer aus gesehenen Querschnittsdarstellung nach Figur 3 als federbelastete Sperrklinke 17 gestaltet sein, die sich im ungestörten Betrieb in der zweiten Führungsbahn 14 im Lagerbock 1 befindet und aus dem Lenker 9 ragt. Wird in Figur 1 das untere Ende des Lenkers 9 nach oben gedrückt (infolge des um das vordere Lenkergelenk 11 drehenden Drehmomentes, welches das Eigengewicht der Lenksäule hervor ruft, oder infolge einer Abwärts- oder Rückwärtsbelastung des Lenkrads durch den beispielsweise einsteigenden Fahrer), so muss die Sperrklinke in der nutförmigen Führungsbahn 14 bleiben und muss die Kräfte aufnehmen und auf den Lagerbock 1 übertragen. Wird dagegen im Falle eines Frontalaufpralles die Lenksäule nach vorne (also in Fahrtrichtung) geschleudert, so wird die Sperrklinke 17 nach unten gedrückt und kann nach Überwindung der geeignet bemessenen Druckkraft einer Feder 18 die Führungsbahn 14 verlassen, weil die Unterseite der Sperrklinke und der Führungsbahn in geeigneter Weise schräg verlaufen.

Entsprechend einer bevorzugten Ausführungsform der Erfindung kann die Sperrklinke 17 in Figur 3 auch mittels eines (nicht dargestellten) Bedienungselementes vom Fahrer in Richtung des Pfeiles P bewegt werden, um die Lenksäule von Hand von der in Figur 1 gezeigten Lage in die in Figur 2 gezeigte Lage zu bringen. Dies kann erwünscht sein, um das Ein- und/oder Aussteigen zu erleichtern. Die in Figur 2 gezeigte Lage, die als so genannte Crash-Position gedacht ist, kann auf diese Weise auch als Ein/Ausstiegsposition genutzt werden. Vorteilhaft ist dabei, dass sich beim Zurückführen der Lenksäule von der Position nach Figur 2 in die Gebrauchsposition nach Figur 1 die zuvor gewählte Höhe und Neigung des Lenkrads von selbst wieder einstellt (so genannte Memory-Funktion).

Das Sperrklinken-Prinzip nach Figur 3 kann bei allen anderen Figuren Anwendung finden.

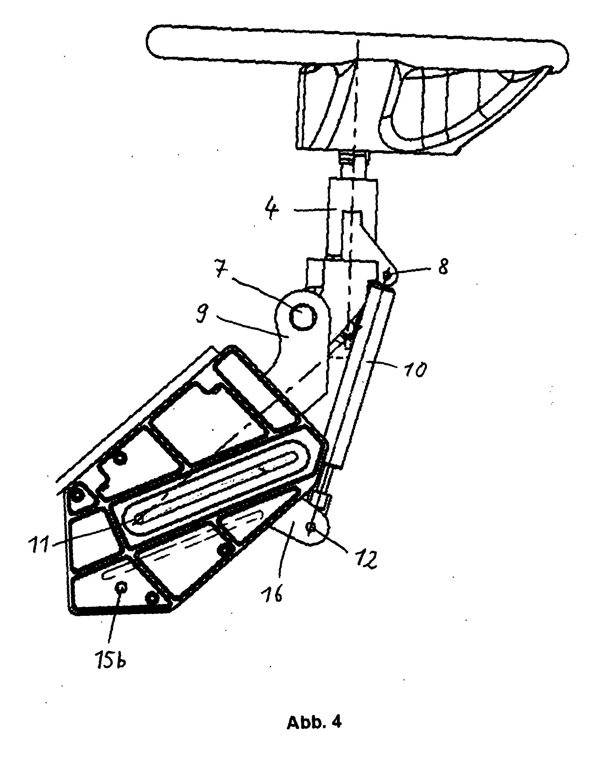

Die Memory-Funktion ist auch bei dem abgewandelten Ausführungsbeispiel nach Figur 4 gegeben, wo die Ein/Ausstiegsposition dargestellt ist. Hier ist der vordere Lenker 9 in der Gebrauchsposition nach Figur 1 geblieben, aber von dem Zwischenteil 16 ist ein Führungselement, das in Figur 1 noch in der Position 15 in der Führungsbahn 14 ruhte, nunmehr ausgeklinkt und in die Position 15b verschoben. Entsprechend ist das Zwischenteil 16 um die Achse des vorderen Lenkergelenks 11 geschwenkt und das hintere Lenkergelenk 12 nach oben verschoben. Bei gleich gebliebener Länge des hinteren Lenkers 10 ist auch das hintere Koppelgelenk 8 nach oben verschoben und das obere Gehäuse (Koppel) 4 um das vordere Lenkergelenk 7 in Fahrtrichtung geschwenkt, wodurch das Ein- und Aussteigen erleichtert ist. Auch für dieses Beispiel kann ein Führungsteil nach Figur 3 für die Führung und zum Ausklinken des Zwischenteiles 16 aus der Führungsbahn 14 verwendet werden, wobei das Ausklinken entweder durch manuelles Anheben des Lenkrads oder durch Bedienen eines (nicht dargestellten) Bedienungselementes bewerkstelligt werden kann. Auch bei dieser Variante ist die Memory-Funktion von Vorteil.

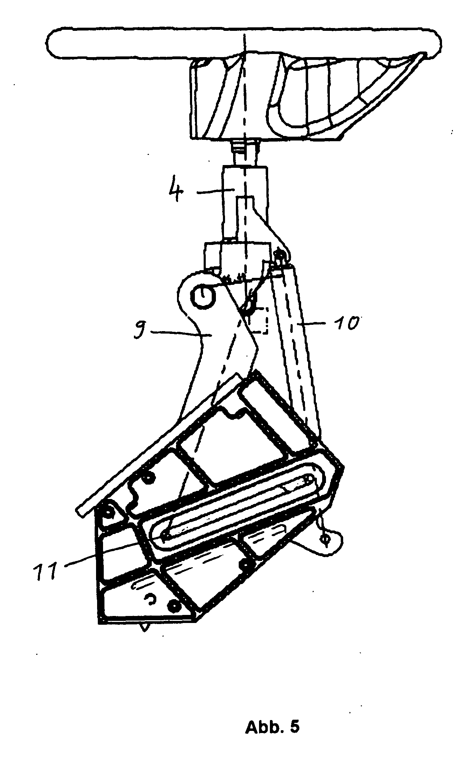

Eine noch bequemere Ein/Ausstiegsposition ist mit dem Beispiel nach Figur 5 erreichbar, bei dem sowohl der vordere Lenker 9 (wie in Figur 2) als auch das Zwischenteil 16 (wie in Figur 4) um die Achse des Lenkergelenks 11 nach oben geschwenkt sind, so dass hier die Koppel am weitesten in Fahrtrichtung verschoben ist und das Ein- und Aussteigen extrem erleichtert ist. Allerdings wird sich diese Lösung (wie auch die Verwendung der Position nach Figur 2 als Ein/Ausstiegsposition) nicht immer verwirklichen lassen, falls das Armaturenbrett einer derart weiten Vorwärtsverlagerung des vorderen Lenkers 9 im Wege steht. (Die Crash-Position nach Figur 2 erfordert zwar ebenfalls eine weite Vorwärtsverlagerung des Lenkers 9, im Falle eines Frontalaufpralles kann hier aber das Armaturenbrett als Crash-Energie verzehrendes Teil nützlich und erwünscht sein). Auch bei der Variante nach Figur 5 ist die Memory-Funktion von Vorteil und es kann das Sperrklinken-Prinzip nach Figur 3 verwendet werden.

Anstelle oder zusätzlich zu der Möglichkeit, die Höhe des Lenkrades durch Verschieben des Lenkers 9 und des Zwischenteils 16 längs der Führungsbahnen 13 und 14 einzustellen, können für die Einstellung des Lenkrades in der Höhe Einstellmittel für eine Höhenverlagerung des gesamten Lagerbocks 1 gegenüber der Fahrerkabine 2 vorgesehen sein. Ferner kann im Falle eines Frontalaufpralles der Lagerbock 1 durch Trägheitskräfte in Fahrtrichtung, also weg vom Fahrer verschiebbar sein, so dass sich der Überlebensraum für den Fahrer vergrößert.

Die Erfindung ist insbesondere bei nicht schienengebundenen Nutzkraftfahrzeugen (einschließlich Omnibussen) anwendbar.

Zusätzlich zu den oben angegebenen Vorteilen wie Optimierung für den Kollisionsfall und Memory-Funktion bietet die erfindungsgemäße Anordnung die Möglichkeit, neben pneumatischen oder elektrischen Lösemechanismen für die Arretierung/Klemmung über eine einfache und kostengünstige, manuelle Betätigung, beispielsweise über ein Fußpedal mit Seilzug in einer ersten Stellung nur das Schwenken des Lenkrads freizugeben und in einer zweiten Stellung zusätzlich die Möglichkeit zur Höheneinstellung zu ermöglichen, wobei die erforderliche Klemmkraft durch die Anzahl der bereit gestellten Klemmflächen (beispielsweise von einer Art von Lamellenkupplung) an Teil 1 und/oder 9 beeinflussbar ist. Damit ist eine gezielte und komfortable Einstellung des Lenkrads möglich. Beispielsweise über ein zusätzliches Fußpedal kann die "Leichte Einstiegs"-Funktion ebenso kostengünstig und unabhängig von der Lenkradverstellung gesteuert werden.

### Bezugszeichenliste

- 1.: Lagerbock
- 2.: Fahrerkabine
- 3.: Fahrersitz
- 4.: oberes Gehäuse/Koppel
- 5.: Lenkspindel
- 6.: Lenkrad
- 7.: vorderes Koppelgelenk
- 8.: hinteres Koppelgelenk
- 9.: vorderer Lenker
- 10.: hinterer Lenker
- 11.: vorderes Lenkergelenk
- 12.: hinteres Lenkergelenk
- 13.: erste Führungsbahn
- 14.: zweite Führungsbahn
- 15.: Führungselement
- 16.: Zwischenteil
- 17.: Sperrklinke
- 18.: Feder
P Pfeil

## Patentansprüche

1. Anordnung einer Lenksäule,
- die in einer Fahrerkabine (2) eines Kraftfahrzeuges angeordnet ist, das einen Fahrersitz (3) aufweist, und
- die im Falle eines Frontalaufpralles der Fahrerkabine eine andere Lage einnehmen kann als im ungestörten Fahrbetrieb,
mit folgenden weiteren Merkmalen:
a) die Lenksäule weist in einem oberen Gehäuse (4) eine Lenkspindel (5) auf, die zum Tragen eines Lenkrads (6) vorgesehen ist,
b) die Lenkspindel ist drehbar in dem oberen Gehäuse gelagert, das in einer Getriebekette (4, 9, 10) die Koppel (4) bildet, die über zwei Koppelgelenke (7, 8) jeweils mit den oberen Bereichen eines vorderen (9) bzw. eines hinteren Lenkers (10) verbunden ist,
c) die Lenkspindel (5) ist mit einer Lenkwelle über ein Gelenk verbunden, das unweit der Koppel (4) vorgesehen ist,
d) beide Lenker (9, 10) sind außerdem in ihren unteren Bereichen über Lenkergelenke (11, 12) an Fahrzeugteile (1, 16) angelenkt, die im ungestörten Fahrbetrieb fest mit der Fahrerkabine (2) verbunden sind,
e) die Geometrie der Getriebekette (4, 9, 10) ist derart gestaltet, dass bei Vorwärtsfahrt im Falle eines Frontalaufpralles die Lenkspindel (5) eine Schutzstellung mit verstärkt der Horizontalen angenäherter Neigung einnehmen kann, wobei die Lenkspindel (5) für den ungestörten Fahrbetrieb mittels Einstellmitteln in der Höhe und Neigung **dadurch** einstellbar ist, dass das obere Gehäuse (4) entsprechend einstellbar ist, und zwar durch Einstellen der Länge von wenigstens einem der Lenker (9,10) und/oder durch Verlagerung von wenigstens einem Lenkergelenk (11,12),
f) für die Einstellung der Lenkspindel (5) in der Höhe ist eine erste Führungsbahn (13) vorgesehen zur mittelbaren oder unmittelbaren Führung eines Lenkergelenks (11) eines Lenkers (9) und für die mittelbare oder unmittelbare Führung des Lenkers (9) ist eine zweite Führungsbahn (14) vorgesehen, die zur ersten Führungsbahn (13) parallel verläuft, wobei im Falle eines Frontalaufpralles diejenige Führung des Lenkers (9), die durch eine (14) der Führungsbahnen erfolgt, selbsttätig aufhebbar ist.

2. Anordnung nach Anspruch 1, **dadurch gekennzeichnet, dass** die Geometrie der Getriebekette (4, 9, 10) und die Massenverteilung derart gewählt sind, dass im Falle eines Frontalaufpralles die Lenkspindel (5) allein mit Hilfe der auftretenden Massenträgheitskräfte die Schutzstellung einnimmt.

3. Anordnung nach einem der vorstehenden Ansprüche 1 bis 2, **dadurch gekennzeichnet, dass** für die Einstellung der Neigung der Lenkspindel (5) die Länge eines Lenkers (10) einstellbar ist.

4. Anordnung nach Anspruch 3, **dadurch gekennzeichnet, dass** der Lenker (10) als blockierbare Gasdruckfeder ausgebildet ist.

5. Anordnung nach einem der vorangehenden Ansprüche, **dadurch gekennzeichnet, dass** für die Einstellung der Neigung der Lenkspindel (5) die Längsrichtung eines Lenkers (9) einstellbar ist.

6. Anordnung nach einem der vorangehenden Ansprüche, **dadurch gekennzeichnet, dass** die Führung zur Erleichterung des Ein- und Aussteigens des Fahrers auch mittels eines Bedienungselementes aufhebbar ist.

7. Anordnung nach einem der vorangehenden Ansprüche, **dadurch gekennzeichnet, dass** ein Lenkergelenk (12) mit einem dieses tragenden Zwischenteil (16) verbunden ist, das zwecks Höheneinstellung auf einer Führungsbahn (13) geführt ist.

8. Anordnung nach Anspruch 7, **dadurch gekennzeichnet, dass** zwecks Erleichterung des Ein- und Aussteigens des Fahrers das Zwischenteil (16) mittels eines Bedienungsmittels derart bewegbar ist, dass sich das Lenkergelenk (12) in eine höhere Position verlagert.

9. Anordnung nach einem der vorangehenden Ansprüche, **dadurch gekennzeichnet, dass** ein Lagerbock (1) vorgesehen ist, der die Lenkergelenke (11, 12) mittelbar oder unmittelbar trägt und der mit der Fahrerkabine (2) verbunden ist.

10. Anordnung nach Anspruch 9, **dadurch gekennzeichnet, dass** für die Einstellung der Lenkspindel (5) in der Höhe Einstellmittel für eine Höhenverlagerung des Lagerbocks (1) vorgesehen sind.

11. Anordnung nach Anspruch 9 oder 10, **dadurch gekennzeichnet, dass** im Falle eines Frontalaufpralles auch der Lagerbock (1) durch Trägheitskräfte in Fahrtrichtung verschiebbar ist.

12. Anordnung nach einem der vorangehenden Ansprüche, **dadurch gekennzeichnet, dass** Arretierungsmittel für die Einstellung der Höhe und/oder Neigung der Lenkspindel (5) über einen Handgriff oder ein Pedal lösbar sind.

## Claims

1. Arrangement of a steering column,
- which is arranged in a driver's cab (2) of a motor vehicle which has a driver's seat (3), and
- which, in the case of a frontal collision of the driver's cab, can assume a different position than in undisrupted driving operation,
having the following features:
a) in an upper housing (4), the steering column has a steering spindle (5) which is provided for carrying a steering wheel (6),
b) the steering spindle is mounted rotatably in the upper housing which, in a gear train (4, 9, 10), forms the coupler (4) which is connected via two coupler joints (7, 8) in each case to the upper regions of a front (9) and a rear link (10),
c) the steering spindle (5) is connected to a steering shaft via a joint which is provided not far from the coupler (4),
d) moreover, both links (9, 10) are articulated in their lower regions via link joints (11, 12) on vehicle parts (1, 16) which, in undisrupted vehicle operation, are connected fixedly to the driver's cab (2),
e) the geometry of the gear train (4, 9, 10) is designed in such a way that, when driving forwards and in the case of a frontal collision, the steering spindle (5) can assume a protective position with an inclination which is approximated to a pronounced extent to the horizontal, it being possible for the steering spindle (5) to have its height and inclination set for undisrupted driving operation by means of setting means, by virtue of the fact that the upper housing (4) can be set accordingly, to be precise by setting the length of at least one of the links (9, 10) and/or by displacement of at least one link joint (11, 12),
f) for setting the height of the steering spindle (5), a first guide track (13) is provided for the indirect or direct guidance of a link joint (11) of a link (9), and a second guide track (14) which extends parallel to the first guide track (13) is provided for the indirect or direct guidance of the link (9), it being possible for that guidance of the link (9) which is carried out by one (14) of the guide tracks to be cancelled automatically in the case of a frontal collision.

2. Arrangement according to Claim 1, **characterized in that** the geometry of the gear train (4, 9, 10) and the mass distribution are selected in such a way that, in the case of a frontal collision, the steering spindle (5) assumes the protective position solely with the aid of the mass inertia forces which occur.

3. Arrangement according to either of preceding Claims 1 and 2, **characterized in that** the length of a link (10) can be set for the setting of the inclination of the steering spindle (5).

4. Arrangement according to Claim 3, **characterized in that** the link (10) is configured as a gas-pressure spring which can be blocked.

5. Arrangement according to one of the preceding claims, **characterized in that** the longitudinal direction of a link (9) can be set for the setting of the inclination of the steering spindle (5).

6. Arrangement according to one of the preceding claims, **characterized in that** the guidance can also be cancelled by means of an operating element in order to facilitate entry and exit of the driver.

7. Arrangement according to one of the preceding claims, **characterized in that** a link joint (12) is connected to an intermediate part (16) which carries the said link joint (12) and is guided on a guide track (13) for the purpose of height adjustment.

8. Arrangement according to Claim 7, **characterized in that**, for the purpose of facilitating entry and exit of the driver, the intermediate part (16) can be moved by means of an operating means in such a way that the link joint (12) is displaced into a higher position.

9. Arrangement according to one of the preceding claims, **characterized in that** a bearing block (1) is provided which carries the link joints (11, 12) indirectly or directly and which is connected to the driver's cab (2).

10. Arrangement according to Claim 9, **characterized in that**, in order to set the height of the steering spindle (5), setting means are provided for displacing the bearing block (1) vertically.

11. Arrangement according to Claim 9 or 10, **characterized in that**, in the case of a frontal collision, the bearing block (1) can also be displaced by inertia forces in the driving direction.

12. Arrangement according to one of the preceding claims, **characterized in that** locking means for setting the height and/or inclination of the steering spindle (5) can be released via a handle or a pedal.

## Revendications

1. Agencement de colonne de direction,
- qui est disposé dans une cabine de conduite (2) d'un véhicule automobile qui présente un siège de conducteur (3), et
- qui, dans le cas d'une collision frontale de la cabine de conduite, peut prendre une position différente de celle adoptée dans le cas d'un fonctionnement de conduite non perturbé,
comprenant les caractéristiques suivantes supplémentaires :
a) la colonne de direction présente, dans un boîtier supérieur (4) un axe de direction (5) qui est prévu pour porter un volant de direction (6),
b) l'axe de direction est monté de manière rotative dans le boîtier supérieur qui forme, dans une chaîne de transmission (4, 9, 10), la bielle (4) qui est connectée par le biais de deux articulations de couplage (7, 8) à chaque fois aux régions supérieures d'un bras oscillant avant (9), respectivement arrière (10),
c) l'axe de direction (5) est connecté à un arbre de direction par le biais d'une articulation, qui est prévue à proximité de la bielle (4),
d) les deux bras oscillants (9, 10) sont articulés en outre dans leurs régions inférieures par le biais d'articulations de bras oscillants (11, 12) à des parties du véhicule (1, 16) qui sont connectées fixement à la cabine de conduite (2) dans le cas d'un fonctionnement de conduite non perturbé,
e) la géométrie de la chaîne de transmission (4, 9, 10) est configurée de telle sorte qu'en conduite de marche avant, dans le cas d'une collision frontale, l'axe de direction (5) puisse adopter une position de protection avec une inclinaison se rapprochant davantage de l'horizontale, l'axe de direction (5) pour le fonctionnement de conduite non perturbé pouvant être ajusté par le biais de moyens d'ajustement en hauteur et en inclinaison en ajustant de manière correspondante le boîtier supérieur (4), et ce par ajustement de la longueur d'au moins l'un des bras oscillants (9, 10) et/ou par décalage d'au moins une articulation de bras oscillant (11, 12),
f) pour l'ajustement de l'axe de direction (5) en hauteur, on prévoit une première piste de guidage (13) pour le guidage direct ou indirect d'une articulation de bras oscillant (11) d'un bras oscillant (9) et pour le guidage direct ou indirect du bras oscillant (9), on prévoit une deuxième piste de guidage (14), qui s'étend parallèlement à la première piste de guidage (13), le guidage respectif du bras oscillant (9) qui s'effectue par l'une (14) des pistes de guidage, pouvant être supprimé automatiquement dans le cas d'une collision frontale.

2. Agencement selon la revendication 1, **caractérisé en ce que** la géométrie de la chaîne de transmission (4, 9, 10) et la répartition des masses sont choisies de telle sorte que dans le cas d'une collision avant, l'axe de direction (5) adopte la position de protection simplement à l'aide des forces d'inertie de masse produites.

3. Agencement selon l'une quelconque des revendications précédentes 1 à 2, **caractérisé en ce que** la longueur d'un bras oscillant (10) peut être ajustée pour ajuster l'inclinaison de l'axe de direction (5).

4. Agencement selon la revendication 3, **caractérisé en ce que** le bras oscillant (10) est réalisé sous forme de ressort de pression à gaz pouvant être bloqué.

5. Agencement selon l'une quelconque des revendications précédentes, **caractérisé en ce que** la direction longitudinale d'un bras oscillant (9) peut être ajustée pour ajuster l'inclinaison de l'axe de direction (5).

6. Agencement selon l'une quelconque des revendications précédentes, **caractérisé en ce que** le guidage peut aussi être supprimé au moyen d'un élément de commande pour faciliter l'accès au véhicule et la sortie du conducteur.

7. Agencement selon l'une quelconque des revendications précédentes, **caractérisé en ce qu'**une articulation de bras oscillant (12) est connectée à une partie intermédiaire (16) portant celle-ci, laquelle est guidée sur une piste de guidage (13) en vue de réaliser l'ajustement en hauteur.

8. Agencement selon la revendication 7, **caractérisé en ce que** la partie intermédiaire (16) peut être déplacée par le biais d'un moyen de commande pour faciliter l'accès au véhicule et la sortie du conducteur, de telle sorte que l'articulation de bras oscillant (12) se décale dans une position plus haute.

9. Agencement selon l'une quelconque des revendications précédentes, **caractérisé en ce que** l'on prévoit un coussinet (1) qui porte directement ou indirectement les articulations de bras oscillant (11, 12), et qui est connecté à la cabine de conduite (2).

10. Agencement selon la revendication 9, **caractérisé en ce que** des moyens d'ajustement sont prévus pour un décalage en hauteur du coussinet (1), pour ajuster l'axe de direction (5) en hauteur.

11. Agencement selon la revendication 9 ou 10, **caractérisé en ce que** dans le cas d'une collision avant, le coussinet (1) peut aussi être déplacé sous l'effet des forces d'inertie dans la direction de conduite.

12. Agencement selon l'une quelconque des revendications précédentes, **caractérisé en ce que** des moyens de blocage pour l'ajustement de la hauteur et/ou de l'inclinaison de l'axe de direction (5) peuvent être desserrés par le biais d'une poignée ou d'une pédale.
